# EUROPÄISCHE PATENTSCHRIFT

(11) **EP 1 719 045 B1**
(45) Veröffentlichungstag und Bekanntmachung des Hinweises auf die Patenterteilung: **17.12.2008**
(21) Anmeldenummer: 05707144.1
(22) Anmeldetag: 02.02.2005
(51) Int. Cl.: G06F 3/02

(54) **MODULARES INFORMATIONSSYSTEM**
MODULAR INFORMATION SYSTEM
SYSTEME D'INFORMATION MODULAIRE

(30) Priorität: 02.02.2004 DE 202004001529 U; 27.05.2004 DE 202004008425 U
(43) Veröffentlichungstag der Anmeldung: 08.11.2006
(73) Patentinhaber: Benecke, Rudolf, 95444 Bayreuth (DE)
(72) Erfinder: Benecke, Rudolf, 95444 Bayreuth (DE)
(74) Vertreter: Wegner, Hans
(86) Internationale Anmeldenummer: PCT/EP2005/001028
(87) Internationale Veröffentlichungsnummer: WO 2005/073883

(56) Entgegenhaltungen:
- WO-A-98/52178
- US-A- 4 568 403
- US-A- 5 535 536
- US-A- 6 149 204
- US-B1- 6 482 510

## Beschreibung

### 1. Technisches Gebiet

Die vorliegende Erfindung betrifft ein modulares Informationssystem, insbesondere ein Werbesystem.

### Der Stand der Technik

In vielen Bereichen des täglichen Lebens ist es erforderlich, Personen gezielt mit Informationen, insbesondere Textangaben oder Bildern, zu versorgen. Hinweise auf technischen Apparaturen, die vor einer falschen oder gefährlichen Benutzung des Gerätes warnen, sind ein Beispiel dafür.

Während Warnhinweise auf Gefahren, die von einem technischen Gerät ausgehen im Allgemeinen eine vom Anwender unmittelbar erwünschte Information darstellen, gibt es auch Fälle, wo eine zusätzliche Information zu einem Gegenstand hinzugefügt wird, ohne dass diese Information von demjenigen, der den Gegenstand verwendet oder kauft, tatsächlich erwünscht ist. Ein Beispiel dafür sind die gesetzlich vorgeschriebenen Hinweise auf die Gesundheits-gefährdung, die von Zigaretten ausgeht, und die zwingend auf jede Zigarettenpackung aufgedruckt werden müssen. Der fest mit der Packung verbundene Warnhinweis, zwingt einen Käufer dessen Inhalt zur Kenntnis zu nehmen, selbst wenn er eigentlich nur erkennen möchte, um welche Zigarettenmarke es sich handelt.

Ohne einen gesetzlichen Zwang ist es jedoch im Allgemeinen sehr aufwändig und kostenintensiv, Informationsträger, die nicht erwünscht sind, einem Gegenstand in einer Weise beizufügen, dass ihr Inhalt mit hoher Wahrscheinlichkeit wahrgenommen wird. Dies stellt insbesondere für Werbetreibende ein erhebliches technisches Problem dar, die eine Vielzahl von im wesentlichen identischen Informationsträgern, beispielsweise Werbeprospekte, gezielt verbreiten möchten. Prospekte, die verteilt oder beispielsweise lose einer Zeitung beigefügt sind, werden überwiegend nicht zur Kenntnis genommen, sondern wandern unbeachtet in den Papierkorb.

Andere bekannte Verfahren, bei denen der Informationsträger beispielsweise durch Heften dauerhaft mit einem weiteren, erwünschten Informationsträger verbunden wird (beispielsweise die zusammengeheftete Kombination Hotelrechnung - Hotelprospekt) verlangen eine zuverlässige und zeitaufwändige Handhabung durch das Bedienpersonal und sind daher schwer umzusetzen.

Aus der US 4,568,403 ist ein Verfahren zur Herstellung einer laminierten Karte, eines Aufklebers o.ä. bekannt, bei der Information auf zwei Seiten angeordnet ist. Dieser Aufkleber kann zum Versand oder zur Anzeige auf einer Grundfläche aufgebracht werden, und hinterlässt bei der Entnahme keine Klebstoffspuren. Aus der WO 98/52178 ist ein Sicherheitsaufkleber mit einem Träger, der eine erste Klebeschicht aufweist, bekannt und einem darauf angeordneten weiteren Aufkleber, der lösbar an der Trägerschicht befestigt ist. Anordnungen, bei denen ein kleiner Aufkleber auf einem größeren Blatt oder ähnlichem lösbar angeordnet wird, sind darüber hinaus aus der US 6,149,204, der US 6,482,510 und der US 5,535,536 bekannt.

Der vorliegenden Erfindung liegt daher das technische Problem zugrunde, ein einfaches und kostengünstiges System sowie ein Verfahren bereitzustellen, mit dem zu geringen Kosten Informationsträger so mit einem anderen Gegenstand verbunden werden, dass der Verwender des Gegenstands mit hoher Wahrscheinlichkeit den Inhalt des Informationsträgers zur Kenntnis nimmt.

### 3. Zusammenfassung der Erfindung

Die vorliegende Erfindung betrifft ein modulares Informationssystem, insbesondere ein Werbesystem, mit einem Druckmedium mit bedruckbaren Abschnitten, einem Satz separater, im Wesentlichen identischer Informationsträger, wobei jeder Informationsträger eine größere Fläche als ein durchschnittlicher bedruckbarer Abschnitt des Druckmediums aufweist, und ein zumindest auf jedem bedruckbaren Abschnitt angeordnetes Klebeelement, wobei das Klebeelement einen bedruckten Abschnitt des Druckmediums und einen separaten Informationsträger nach dem Verkleben manuell lösbar miteinander verbindet.

Das erfindungsgemäße System verbindet konstruktive Elemente, die an sich bekannt sind, in neuer und erfinderischer Weise zu einem Gesamtsystem, das die oben genannten Probleme bei der Verteilung der Informationsträger überwindet.

Die Abschnitte des Druckmediums können mit vom Anwender benötigter individueller Information einseitig oder beidseitig bedruckt werden. Das vorzugsweise auf der Rückseite des bedruckbaren Abschnitts angeordnete Klebeelement verhindert zunächst eine separate Handhabung der einzelnen Abschnitte, die deswegen zwingend auf einer Unterlage befestigt werden müssen. Der im erfindungsgemäßen System ebenfalls bereitgestellte Satz von im Wesentlichen identischen Informationsträgern stellt solche Unterlagen bereit und ermöglicht damit jeden Abschnitt jeweils mit einem separaten Informationsträger manuell lösbar zu verbinden. Da der Informationsträger eine größere Fläche als der bedruckte Abschnitt aufweist, ist die Klebeverbindung in einfachster Weise durch eine einzige Handbewegung realisierbar und damit viel schneller als das oben erwähnte, umständliche Zusammenheften.

Die durch das erfindungsgemäße System bereitgestellte temporäre Verbindung zwischen dem bedruckten Abschnitt und dem separaten Informationsträger führt dazu, dass der Inhalt des Informationsträgers mit ungleich höherer Wahrscheinlichkeit zur Kenntnis genommen wird als in den oben erläuterten Verfahren nach dem Stand der Technik (Beifügen loser Prospekte etc.).

Darüber hinaus ist die Klebeverbindung zwischen dem bedruckten Abschnitt und dem einzelnen Informationsträger erfindungsgemäß so geartet, dass die Verbindung manuell lösbar ist, wenn später der bedruckte Abschnitt getrennt vom Informationsträger archiviert werden soll, beispielsweise wenn es sich bei dem Abschnitt um einen Kassenbon handelt, der später in ein Rechnungsbuch eingeklebt werden soll. Dazu kann vorzugsweise der bedruckte Abschnitt im Wesentlichen rückstandsfrei vom Informationsträger entfernt werden.

Das Druckmedium ist mit den bedruckbaren Abschnitten als eine Kassenrolle zum Bedrucken einzelner Kassenbons ausgebildet. Dabei ist das Klebeelement vorzugsweise als ein Klebefilm ausgebildet, wobei der Klebefilm selbst zumindest in einem Teilbereich die Form eines informationsvermittelnden Symbols aufweist.

Mit dieser Weiterentwicklung der Erfindung werden die beiden Aspekte der Informationsvermittlung einerseits und der Klebebefestigung andererseits in einem konstruktiven Merkmal miteinander verbunden. In einem Ausführungsbeispiel weist der Klebefilm dazu die Form eines oder mehrerer Buchstaben auf, die auch ganze Wörter bilden können.

In einem anderen Ausführungsbeispiel weist der Klebefilm des Druckmediums sich periodisch wiederholende Symbole auf, die so angeordnet sind, dass bei einer Mindestgröße eines Abschnitts des Druckmediums zumindest ein Symbol auf der Rückseite des Abschnitts angeordnet ist. Damit wird sichergestellt, dass jeder Abschnitt lösbar auf dem Informationsträger, beispielsweise einem Werbeprospekt, befestigt werden kann. Die Symbole müssen jedoch nicht identisch sein. Denkbar ist beispielsweise auch eine einfache Durchnummerierung der Abschnitte durch als entsprechende Zahlen ausgebildete Klebeflächen auf der Rückseite des Druckmediums.

In einem Ausführungsbeispiel weist der Klebefilm Materialeigenschaften auf, um beim Aufkleben eines Abschnitts des Druckmediums auf den Informationsträger und dem nachfolgenden Entfernen des Abschnitts einen erkennbaren Abdruck zu hinterlassen. Beispielsweise kann auf diese Art mit dem Klebefilm die Internetadresse eines werbenden Unternehmens auf den Informationsträger "gestempelt" werden, damit sie sich besser einprägt. Handelt es sich in diesem Ausführungsbeispiel um Symbole, bei denen es auf die Orientierung ankommt, ist es vorteilhaft, wenn der Klebefilm die Form des informationsvermittelnden Symbols in spiegelverkehrter Orientierung aufweist. Der Abdruck ist dann unmittelbar zu erkennen.

In einer Weiterentwicklung des erläuterten Systems werden jeweils ein bedruckter Abschnitt und ein Informationsträger automatisch durch das Klebeelement miteinander verbunden. Dies lässt sich beispielsweise durch entsprechende mechanische Einrichtungen in einer Kasse oder einem separaten Drucker realisieren, mit denen der ausgedruckte Bon automatisch auf den separaten Informationsträger aufgeklebt wird.

Um eine einfache Benutzung zu unterstützen, entspricht die Anzahl der Informationsträger eines Satzes des modularen Informationssystems vorzugsweise im Wesentlichen der Anzahl bedruckbarer Abschnitte des Druckmediums. Damit wird sichergestellt, dass für jeden bedruckten Abschnitt im Wesentlichen genau ein Informationsträger als Unterlage zum Verbinden bereitsteht und das gesamte Druckmedium sinnvoll genutzt werden kann. Dies kann durch eine geeignete Verpackung des Systems, beispielsweise eine Anzahl Kassenrollen gemeinsam mit der dazu passenden Anzahl Informationsträger erreicht werden.

Gemäß eines weiteren Aspekts betrifft die vorliegende Erfindung ein Verfahren zur Ausgabe von separaten Informationsträgern mit den Schritten:
- Bereitstellens eines Druckmediums zum Bedrucken von einzelnen Abschnitten des Druckmediums und eines Satzes separater, im Wesentlichen identischer Informationsträger, wobei jeder Informations-träger eine größere Fläche als ein durchschnittlicher Abschnitt des Druckmediums aufweist;
- Bedrucken von einzelnen Abschnitten des Druckmediums, wobei jeder Abschnitt ein Klebelement aufweist;
- Aufbringen eines jeweiligen Abschnitts auf einen separaten Informationsträger, so dass die Verbindung zwischen dem Abschnitt und dem Informationsträger manuell lösbar ist; und
- Ausgabe des mit dem separaten Informationsträger verbundenen Abschnitts an einen Empfänger.

Weitere Fortentwicklungen bilden den Gegenstand weiterer abhängiger Ansprüche

### 4. Kurze Beschreibung der Zeichnung

In der folgenden detaillierten Beschreibung wird eine derzeit bevorzugte Ausführungsform der Erfindung unter Bezugnahme auf die Zeichnung beschrieben. Diese Zeichnung zeigt:
- Fig. 1:: Eine schematische Darstellung einer ersten bevorzugten Ausführungsform des erfindungsgemäßen Systems sowie der Schritte des erläuterten Verfahrens;
- Fig. 2a - e:: Schematische Darstellung einer weiteren Ausführungsform des Druckmediums gemäß der vorliegenden Erfindung mit einem Klebefilm in Textform. Die Figuren 2b - 2e zeigen das Übertragen der Textinformation im Klebefilm auf einen Informationsträger;
- Fig. 3:: Schematische Darstellung einer alternativen Ausführungsform, bei der die informationsvermittelnden Symbole als Noten ausgebildet sind.
- Fig. 4:: Schematische Darstellung einer weiteren Ausführungsform, bei der das informationsvermittelnde Symbol als eine eingetragene Marke ausgebildet ist.
- Fig. 5:: Schematische Darstellung einer Ausführungsform, bei der das Druckmedium auf seiner Rückseite unterhalb des durchsichtigen Klebefihns bedruckt ist.

### 5. Detaillierte Beschreibung eines bevorzugten Ausführungsbeispiels

Im Folgenden wird ein bevorzugtes Ausführungsbeispiel eines modularen Informationssystems und eines Verfahrens gemäß der vorliegenden Erfindung am Beispiel der Kombination aus einem Satz von Werbeprospekten und einer speziell aufbereiteten Kassenrolle erläutert. Es versteht sich jedoch, dass die Erfindung auch Systeme mit anderen Druckmedien und anderen Informationsträgern umfasst.

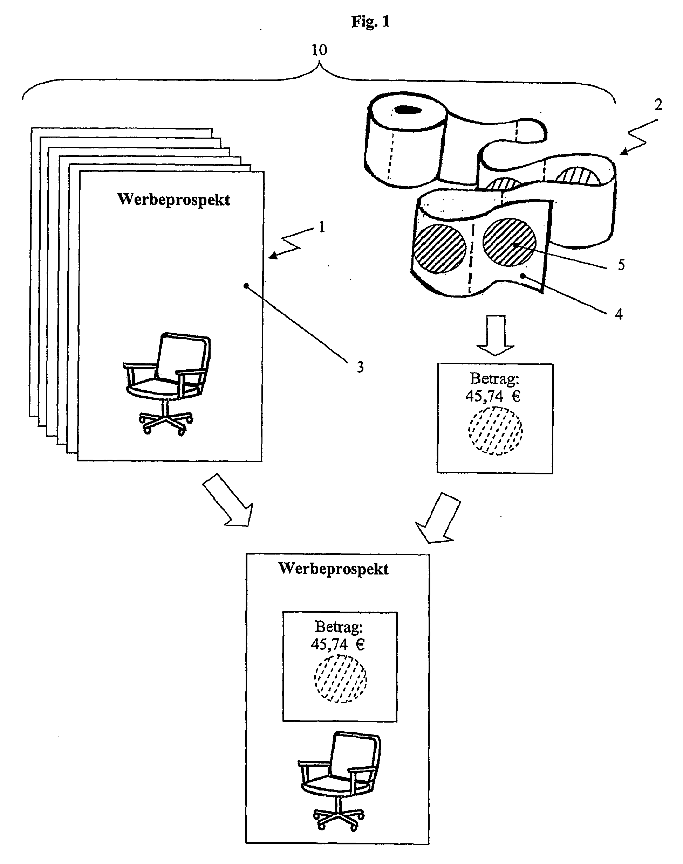

Fig. 1 erläutert schematisch den allgemeinen Aufbau: Eine Satz 1 von einzelnen, separaten Werbeprospekten 3, beispielsweise für einen neuen Stuhl, wird mit einer Kassenrolle 2 zu einem modularen Informationssystem 10 kombiniert. Die Kassenrolle 2 dient zum Bedrucken mit individueller Bezahlinformation einer Verkaufsstelle, beispielsweise einer Tankstelle, und weist dazu eine Vielzahl von bedruckbaren Abschnitten 4 auf. Durch das Bedrucken werden die Abschnitte 4 einzeln individualisiert, so dass im Wesentlichen kein Abschnitt 4 identisch zu einem anderen Abschnitt ist. Vorzugsweise besteht zwischen der individuellen, auf einen Abschnitt 4 aufgedruckten Information und dem Inhalt des Werbeprospekts 3 kein Zusammenhang.

Die Größe der Abschnitte 4 kann vordefiniert sein, wie durch die gestrichelten Linien in Fig. 1 angedeutet oder sich aus der Menge der aufzudruckenden Information ergeben. Auf der Rückseite weist jeder Abschnitt 4 zumindest einen Teilbereich 5 auf, der mit einem Klebefilm 5 oder ähnlichem versehen ist. Denkbar ist auch die gesamte Rückseite der Kassenrolle 2 mit einem durchgehenden Klebefilm 5 o.ä. zu versehen. Allerdings erleichtert eine nur teilweise Beschichtung der Rückseite später das manuelle Lösen des Abschnitts 4 vom Werbeprospekt 3. Unabhängig von der Größe wird durch eine geeignete Passivierung sichergestellt, dass der Klebefilm 5 die Kassenrolle 2 im aufgerollten Zustand nicht verklebt.

Möglich ist jedoch auch eine Ausbildung des Klebefilms als eine elektrostatische Aufladung zumindest eines Teilbereichs jedes Abschnitts, wobei die elektrostatische Aufladung vor oder nach dem Bedrucken erfolgen kann. In einer anderen Abwandlung ist in den Abschnitt ein magnetisierbares Material eingearbeitet, dass ein Anhaften an einem geeigneten Informationsträger ermöglicht, dessen sonstige Eigenschaften weiter unten im Detail erläutert werden.

Alternativ kann auch eine Spezialbeschichtung verwendet werden, die zunächst nicht klebt und erst beim Verlassen der Kasse oder des separaten Druckers aktiviert wird, beispielsweise durch Bestrahlung mit UV-Licht, Erwärmung o.ä.. Im einfachsten Fall ist auch die automatische Entfernung einer Abdeckfolie oder eines Trägerpapiers in der Kasse oder dem Drucker bei der Ausgabe des Abschnitts möglich. Die Aktivierung der Spezialbeschichtung oder Trennung der Abdeckfolie kann auch in einer separaten Verarbeitungsstation erfolgen, die von der Kassenrolle nach dem Bedrucken durchlaufen wird. Ebenso ist es möglich die gesamte Klebebeschichtung erst nach dem Bedrucken aufzubringen, sei es in der Druckvorrichtung selbst oder in einer anderen Vorrichtung oder auch manuell. Eine vorteilhafte Realisierung dieser nachträglichen Beschichtung ist der Kontakt der Rückseite der bedruckten Bereiche der Kassenrolle mit einem Trägerpapier, von dem aus der Klebefilm auf die Kassenrolle übertragen wird (nicht dargestellt).

Nach dem Bedrucken wird der Abschnitt 4 vorzugsweise unmittelbar in klebendem Zustand von der Kasse (nicht dargestellt), einem separaten Drucker (nicht dargestellt) oder der genannten Verarbeitungsstation ausgegeben. Dies zwingt das Bedienungspersonal dazu den Abschnitt 4, wie in Fig. 1 schematisch angedeutet, unmittelbar auf einen der Werbeprospekte 3 aufzukleben, bevor die Kombination aus individualisiertem Abschnitt 4 und Werbeprospekt 3 an den Kunden ausgegeben werden kann. Dadurch wird die gewünschte Information, der individuell bedruckte Abschnitt 4 unmittelbar mit weiterer Information auf dem Werbeprospekt verbunden. Der Empfänger wird daher den Prospekt 3 nicht unmittelbar wegwerfen, sondern die dort enthaltene Information mit großer Wahrscheinlichkeit zur Kenntnis nehmen und bis ins Büro oder die Wohnung befördern.

Da der bedruckte Abschnitt 4 bereits in klebendem Zustand aus der Kasse oder dem Drucker kommt, ist es lediglich erforderlich, den Abschnitt vom Rest der Rolle 2 zu trennen, beispielsweise durch Abreißen und kurz gegen den Werbeprospekt 3 zu drücken. Dazu befindet sich der Satz 1 vorzugsweise in unmittelbarer Nähe der Kasse oder des separaten Druckers. Erleichtert wird dieser abschließende Schritt, da der Werbeprospekt eine größere Fläche als ein durchschnittlicher einzelner Abschnitt 4 aufweist. Eine genaue Positionierung auf dem Werbeprospekt ist daher nicht unbedingt erforderlich. Alternativ ist es auch möglich Einrichtungen an der Kasse, dem Drucker oder zusätzlich dazu vorzusehen, die den Abschnitt 4 halb- oder vollautomatisch auf den Werbeprospekt 3 aufkleben.

Der Satz 1 von Werbeprospekten 3 weist eine bestimmte Anzahl von Exemplaren des im Wesentlichen identischen Werbeprospekts 3 auf. Als geringfügige Abweichung von der vollkommenen Übereinstimmung ist beispielsweise eine Durchnummerierung denkbar. Möglich ist auch die Bereitstellung mehrerer Gruppen von im wesentlichen identischen Werbeprospekten 3 in einem gemeinsamen Satz 1. Die Anzahl von Werbeprospekten 3 eines Satzes 1 ist vorzugsweise auf die Länge der Kassenrolle 2 abgestimmt, so dass bei einem normalen Verbrauch, für jeden Abschnitt 4 im Wesentlichen ein Werbeprospekt 3 zur Verfügung steht. Im Fall von nicht fest vorgegebenen Abschnittsgrößen wird dabei die durchschnittliche Größe eines Abschnitts zu Grunde gelegt.

Der klebende Bereich 5 weist eine Zusammensetzung auf, die eine stabile aber manuell lösbare Verbindung zwischen einem bedruckten Abschnitt 4 und einem Werbeprospekt 3 sicherstellt. Denkbar ist auch, dass zusätzlich die Oberfläche des Werbeprospekts 3 chemisch beschichtet ist (nicht dargestellt). Damit kann zweierlei erreicht werden. Zum einen kann die Klebewirkung verstärkt werden oder überhaupt erst dann auftreten, wenn der klebende Bereich 5 mit der Oberfläche des Werbeprospekts 3 in Berührung kommt. In einer weiteren Fortentwicklung tritt die manuelle Lösbarkeit von Abschnitt und Werbeprospekt erst zeitverzögert ein (beispielsweise zehn Minuten nach dem Verbinden), wodurch der Kunde vollständig gezwungen wird, den Abschnitt 4 zunächst gemeinsam mit dem Werbeprospekt mitzunehmen.

Alternativ oder zusätzlich kann die Beschichtung des Werbeprospekts 3 auch sicherstellen, dass die Haftwirkung zwischen dem Werbeprospekt 3 und dem bedruckten Abschnitt 4 zeitlich begrenzt ist. Dies lässt sich durch die Auswahl von dem Fachmann bekannten Chemikalien erreichen. Im Ergebnis wird dadurch das spätere Lösen des Abschnitts 4 vom Werbeprospekt erleichtert. Denkbar ist jedoch auch die Verwendung eines gewöhnlichen Haftklebers, der zunächst die stabile aber lösbare Verbindung zwischen dem Abschnitt 4 und dem Werbeprospekt 3 sicherstellt und später unmittelbar zum Einkleben des Abschnitts 4 in ein Fahrtenbuch dient. In jedem Fall ist es bevorzugt, wenn der bedruckte Abschnitt später im Wesentlichen rückstandsfrei vom Werbeprospekt entfernt werden kann und beim Lösen nicht beschädigt wird.

Der Werbeprospekt - beispielsweise ein einzelnes Blatt aus Papier, Karton oder sogar eine mehrseitig gefaltete Broschüre - weist vorzugsweise nur ein kleines Format auf, damit die Kombination aus Abschnitt 4 und Werbeprospekt 3 nicht zu unhandlich wird und auf eine zu große Ablehnung des Kunden stößt. Bevorzugt sind Westentaschenformate ≤ Kuvertformat (22 x 11 cm).

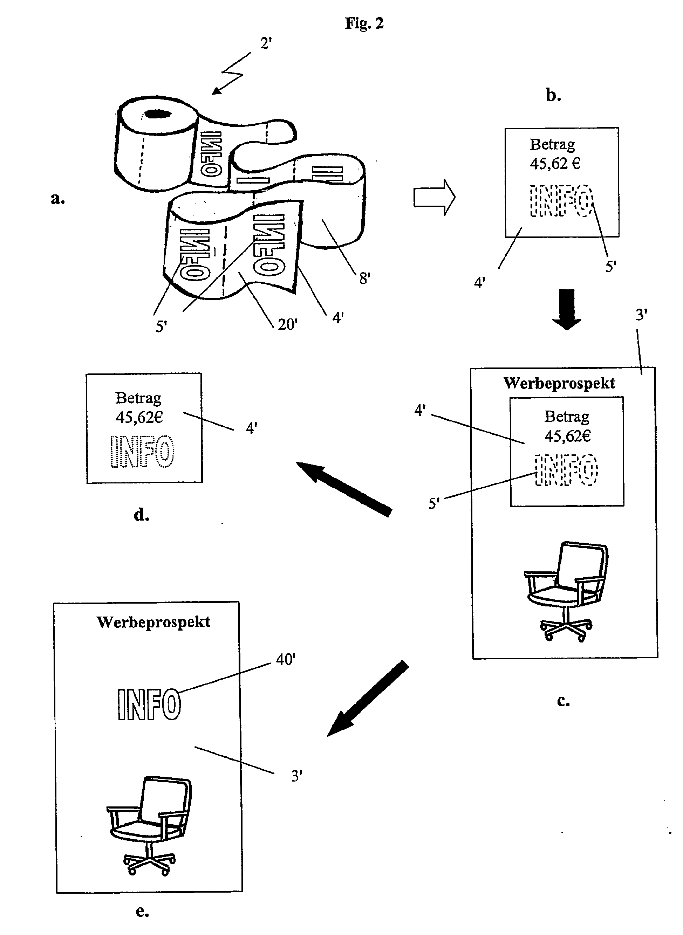

Die Figuren 2 - 4 zeigen eine besonders vorteilhafte Weiterentwicklung des erläuterten Systems, die im Folgenden näher erläutert wird: In Fig. 2a erkennt man eine Kassenrolle 2' mit einer Vorderseite 8' und einer Rückseite 20'. Die Kassenrolle 2' kann in bekannter Weise auf der Vorderseite 8' mit gewünschter Information bedruckt werden. Danach wird der bedruckte Abschnitt 4' durch Schneiden oder Abreißen vom Rest der Rolle 2' getrennt. Obwohl in den Figuren mit gleicher Größe dargestellt können die Abschnitte 4' verschiedene Größen aufweisen. Im Allgemeinen richten sich die Abmessungen eines Abschnitts 4' nach der Menge der auf der Vorderseite 8' aufgedruckten Information.

Die Rückseite 20' der Kassenrolle 2' ist mit einem Klebefilm 5' ausgestattet, um den Abschnitt 4' auf einem Informationsträger 3' anzuordnen, so wie es oben am Beispiel eines Werbeprospekts beschrieben werden ist. Der Klebefilm 5' hat dabei in der in Fig. 2a schematisch gezeigten Ausführungsform die Gestalt von zusätzlicher Textinformation. Der Klebefilm 5' kann dazu eingefärbt sein, um die zu vermittelnde Information leicht erkennbar zu gestalten oder nahezu farblos ausgebildet sein und daher ähnlich wie ein Wasserzeichen nur bei aufmerksamer Betrachtung zu erkennen sein.

In jedem Fall ermöglicht die erfindungsgemäße Gestaltung des Klebefilms 5' nicht nur eine Befestigung des Abschnitts 4' auf dem Informationsträger 3', sondern es kann dem Anwender zusätzliche Information übermittelt werden, beispielsweise Werbebotschaften, wichtige Adressen, Telefonnummern oder ähnliches. Die Information in der Form des Klebefilms 5' ist in einer einfachen Ausführungsform für jeden Abschnitt 4' identisch, wobei die Abschnitte 4' vorzugsweise eine Mindestgröße aufweisen, so dass jeder Abschnitt 4' mit einem Klebefilm 5' versehen ist. Es ist allerdings ebenso denkbar individuelle Symbole durch die Form des Klebefilms 5' auf die Rückseite 20' aufzubringen.

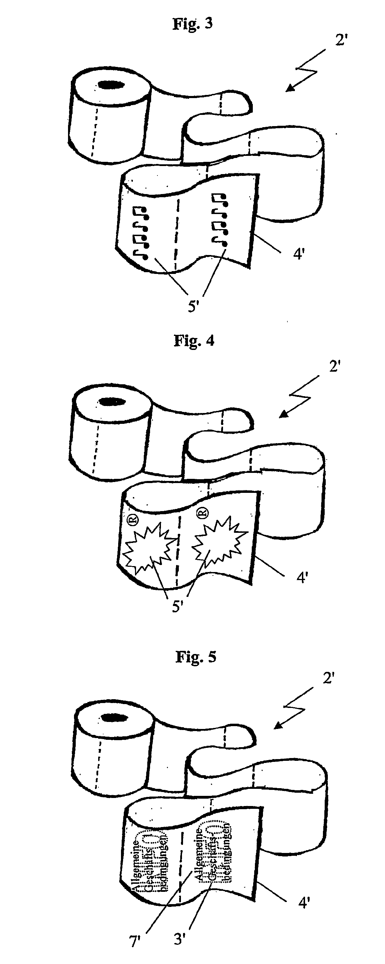

Der Klebefilm 5' kann die Form der verschiedensten informationsvermittelnden Symbole aufweisen. So nimmt in dem in Fig. 3 schematisch dargestellten Ausführungsbeispiel der Klebefilm 5' die Form von einer oder mehreren Musiknoten an. Fig. 4 zeigt eine weitere Variante, bei der die Form des Klebefilms 5' durch die Wiedergabe einer Marke in Wort- und/ oder Bildform auf ein gewünschtes Unternehmen o.ä. hinweist.

Die informationsübertragende Formgebung des Klebefilms 5' wird besonders gut wahrnehmbar, wenn der Abschnitt 4' zeitweilig auf dem Informationsträger 3' festgeklebt wird, wie in den Figuren 2c. - 2e. dargestellt. Wenn der Klebefilm 5' aus einem geeigneten Material gefertigt ist, kann er beim Entfernen des Abschnitts 4' vom Informationsträger 3' einen Abdruck 40' hinterlassen. Die dafür erforderlichen Materialzusammensetzungen sind dem Fachmann der Klebetechnik bestens bekannt. Beispielsweise kann dazu der Klebefilm 5' eingefärbt werden, so dass sich die Farbe wie bei einem Stempel auf den Informationsträger 3' überträgt.

Ein solcher Abdruck 40' könnte für längere Zeit auf dem Informationsträger 3' verbleiben oder leicht ablösbar ausgebildet sein. Diese Variante wird bevorzugt zu Werbezwecken verwendet. Hier kann ein sichtbarer aber nicht auf Dauer unentfernbarer Abdruck 40' des Klebefilms 5' noch ein letztes Mal die gewünschte Werbebotschaft übermitteln, wenn der Abschnitt 4' entfernt wird (vgl. Figuren 2d und e.).

Wenn der Klebefilm 5' in der erläuterten Weise ausgebildet ist, um einen erkennbaren Abdruck 40' nach dem Ablösen des Abschnitts 4' zu hinterlassen, ist es bei Text, aber auch anderen informationsvermittelnden Symbolen sinnvoll die entsprechende Klebeschicht 5' spiegelverkehrt auf dem Abschnitt 4' aufzubringen. Die Figuren 2a - e verdeutlichen dies an dem spiegelverkehrten Wort "INFO" auf dem Abschnitt 4'.

Fig. 5 zeigt schließlich eine weitere Ausführungsform, in der die Rückseite 20' nicht nur den erfindungsgemäßen Klebefilm 5' aufweist, sondern zusätzlich in bekannter Weise bedruckt ist, beispielsweise mit den Allgemeinen Geschäftsbedingungen 7' oder ähnlichen Daten des Verwenders der Kassenrolle. Auch für solch eine Kassenrolle 2' lässt sich der Klebefilm 5' in einer Form aufbringen, die zusätzlich zur Vorderseite 8' und zur Rückseite 20' weitere Informationen an den Anwender überträgt.

Obwohl in diesem Fall nahezu durchsichtige Klebefilme 5' bevorzugt Verwendung finden (vgl. Fig. 5), ist es durch die Verwendung geeigneter Chemikalien auch dann möglich einen zunächst durchsichtigen Klebefilm so auszubilden, dass er sich nach Abzug von der Rolle verfärbt, beispielsweise durch den Kontakt mit der Umgebungsluft. Dadurch wird zunächst die Kenntnisnahme der aufgedruckten Daten 7' ermöglicht und nachfolgend die besondere Formgebung des Klebefilms 5' deutlich erkennbar, so dass die darin enthaltene Information ebenfalls wahrgenommen wird.

## Patentansprüche

1. Modulares Informationssystem (10), insbesondere Werbesystem, aufweisend:
a. ein Druckmedium (2, 2') mit bedruckbaren Abschnitten (4, 4');
b. einen Satz (1) separater, im Wesentlichen identischer Informationsträger (3, 3'), wobei jeder Informationsträger (3, 3') eine größere Fläche als ein durchschnittlicher Abschnitt (4, 4') des Druckmediums (2, 2') aufweist.
c. ein zumindest auf jedem Abschnitt (4, 4') angeordnetes Klebeelement (5, 5'), wobei das Klebeelement (5, 5') *geeignet ist,* einen bedruckten Abschnitt (4, 4') und einen separaten Informationsträger (3, 3') manuell lösbar miteinander zu verbinden, ***dadurch gekennzeichnet, dass***
*d*. *das Druckmedium* (2, *2') als eine Kassenrolle ausgebildet ist.*

2. Modulares Informationssystem (10) nach Anspruch 1, wobei das Klebeelement (5, 5') als ein Haftfilm ausgebildet ist, der zumindest Teilbereiche der Rückseite des Abschnitts (4, 4') bedeckt.

3. Modulares Informationssystem (10) nach einem der vorhergehenden Ansprüche, wobei das Klebeelement als ein Klebefilm (5') ausgebildet ist, der zumindest in einem Teilbereich die Form eines informationsvermittelnden Symbols aufweist.

4. Modulares Informationssystem (10) nach Anspruch 3 wobei der Klebefilm (5') die Form eines oder mehrerer Buchstaben aufweist.

5. Modulares Informationssystem (10) nach Anspruch 4, wobei der Klebefilm (5') sich periodisch wiederholende Symbole aufweist, die so angeordnet sind, dass bei einer Mindestgröße eines Abschnitts (4') des Druckmediums (2') zumindest ein Symbol auf der Rückseite (20') des Abschnitts (2') angeordnet ist.

6. Modulares Informationssystem (10) nach Anspruch 5, wobei der Klebefilm (5') in dem zumindest einen Teilbereich die Form des informationsvermittelnden Symbols in spiegelverkehrter Orientierung aufweist.

7. Modulares Informationssystem (10) nach einem der Ansprüche 3 - 6, wobei der Klebefilm (5') aus einem wahrnehmbaren aber zugleich durchsichtigen Material ausgebildet ist, so dass Zusatzinformationen (7') auf der Rückseite (20) des Druckmediums (2') erkennbar sind.

8. Modulares Informationssystem (10) nach einem der vorhergehenden Ansprüche, wobei die im Wesentlichen identischen Informationsträger (3, 3') jeweils eine oder mehrere Papierseiten umfassen.

9. Modulares Informationssystem (10) nach einem der vorhergehenden Ansprüche, wobei der Informationsträger (3, 3') ein Format ≤ Kuvertformat von 22 cm x 11 cm aufweist.

10. Modulares Informationssystem (10) nach einem der vorhergehenden Ansprüche, wobei die Anzahl der Informationsträger (3, 3') im Satz (1) mit der Anzahl bedruckbarer Abschnitte (4, 4') des Druckmediums (2, 2') im Wesentlichen übereinstimmt.

11. Modulares Informationssystem (10) nach einem der vorhergehenden Ansprüche, wobei das Klebeelement als eine durch UV-Licht, Wärme o.ä. aktivierbare Beschichtung ausgebildet ist.

12. Modulares Informationssystem (10) nach einem der Ansprüche 1 oder 2, wobei das Klebeelement als ein magnetischer und / oder ein elektrostatisch aufgeladener Bereich des bedruckbaren Abschnitts (4, 4') ausgebildet ist.

## Claims

1. Modular information system (10) in particular advertising system, the system comprises:
a. a printing medium (2, 2') with sections (4, 4') which can be printed;
b. a set (1) of separated, essentially identical information carriers (3, 3') wherein each information carrier (3, 3') has a larger surface as an average section (4, 4') of the printing medium (2, 2');
c. an adhesive member (5, 5') arranged at least on each section (4, 4') wherein the adhesive member (5, 5') is suitable to connect a printed section (4, 4') and a separated information carrier (3) manually detachable **characterized in that**
d. the printing medium (2, 2') is provided as a till roll (Kassenrolle).

2. Modular information system (10) according to claim 1, wherein the adhesive member (5, 5') is provided as an adherence film covering at least parts of the backside of the sections (4, 4').

3. Modular information system (10) according to one of the proceeding claims, wherein the adhesive member is provided as an adhesive film (5') which has at least in a portion the shape of an information transferring symbol.

4. Modular information system (10) according to claim 3 wherein the adhesive film (5') has the shape of one or several letters.

5. Modular information system (10) according to claim 4, wherein the adhesive film (5') has periodically repeating symbols which are arranged in such a manner that with a minimum size of a section (4') of the printing medium (2') at least one symbol is arranged on the backside (20') of the section (2').

6. Modular information system (10) according to claim 5, wherein the adhesive film (5') has in at least one portion the shape of the information transferring symbol in a mirror-inverted orientation.

7. Modular information system (10) according to one of the claims 3 to 6, wherein the adhesive film (5') is provided by an observable but likewise transparent material so that additional information (7') are identifiable on the backside (20) of the printing medium (2').

8. Modular information system (10) according to one of the proceeding claims, wherein the essentially identical information carriers (3, 3') each comprise one or several paper pages.

9. Modular information system (10) according to one of the proceeding claims, wherein the information carrier (3, 3') has a format ≤ envelope format of 22 cm x 11 cm.

10. Modular information system (10) according to one of the proceeding claims, wherein the number of the information carriers (3, 3') in the set (1) essentially corresponds with the number of printable sections (4, 4') of the printing medium (2, 2').

11. Modular information system (10) according to one of the proceeding claims, wherein the adhesive member is provided as a layer activatable by means of UV-light, heat or the like.

12. Modular information system (10) according to one of the claims 1 or 2, wherein, the adhesive member is provided as a magnetical and/or an electrostatic charged area of the printable section (4, 4').

## Revendications

1. Système d'information modulaire (10), en particulier système publicitaire, comprenant :
a. un support à imprimer (2, 2') comportant des portions imprimables (4, 4') ;
b. un lot (1) de supports d'information (3, 3') séparés sensiblement identiques, chaque support d'information (3, 3') présentant une surface supérieure à celle d'une portion moyenne (4, 4') du support à imprimer (2, 2') ;
c. un élément collant (5, 5') agencé au moins sur chaque portion (4, 4'), l'élément collant (5, 5') étant approprié pour relier l'un à l'autre de façon manuellement détachable une portion imprimée (4, 4') et un support d'information séparé (3, 3'), **caractérisé en ce que**
d. le support à imprimer (2, 2') est réalisé comme un rouleau de papier à caisse.

2. Système d'information modulaire (10) selon la revendication 1, dans lequel l'élément collant (5, 5') est réalisé comme un film adhésif qui recouvre au moins des zones partielles du verso de la portion (4, 4').

3. Système d'information modulaire (10) selon l'une des revendications précédentes, dans lequel l'élément collant est réalisé comme un film collant (5') qui présente au moins dans une zone partielle la forme d'un symbole communiquant une information.

4. Système d'information modulaire (10) selon la revendication 3, dans lequel le film collant (5') présente la forme d'une ou de plusieurs lettres.

5. Système d'information modulaire (10) selon la revendication 4, dans lequel le film collant (5') présente des symboles qui se répètent périodiquement et qui sont agencés de telle sorte que pour une taille minimale d'une portion (4') du support à imprimer (2'), au moins un symbole est agencé sur le verso (20') de la portion (2').

6. Système d'information modulaire (10) selon la revendication 5, dans lequel le film collant (5') présente dans ladite au moins une zone partielle la forme du symbole communiquant une information avec une orientation symétrique inverse.

7. Système d'information modulaire (10) selon l'une des revendications 3 à 6, dans lequel le film collant (5') est réalisé à partir d'un matériau perceptible mais simultanément transparent, de sorte que des informations supplémentaires (7') sur le verso (20) du support à imprimer (2') sont discernables.

8. Système d'information modulaire (10) selon l'une des revendications précédentes, dans lequel les supports d'information (3, 3') sensiblement identiques comprennent chacun une ou plusieurs pages de papier.

9. Système d'information modulaire (10) selon l'une des revendications précédentes, dans lequel le support d'information (3, 3') présente un format ≤ au format enveloppe de 22 cm x 11 cm.

10. Système d'information modulaire (10) selon l'une des revendications précédentes, dans lequel le nombre de supports d'information (3, 3') dans le lot (1) coïncide sensiblement avec le nombre de portions imprimables (4, 4') du support à imprimer (2, 2').

11. Système d'information modulaire (10) selon l'une des revendications précédentes, dans lequel l'élément collant est réalisé par un revêtement activable par lumière ultraviolette, chaleur ou similaire.

12. Système d'information modulaire (10) selon l'une des revendications 1 ou 2, dans lequel l'élément collant est réalisé comme une zone magnétique et/ou chargée par voie électrostatique de la portion imprimable (4, 4').
